# EUROPEAN PATENT SPECIFICATION

(11) **EP 4 326 658 B1**
(45) Date of publication and mention of the grant of the patent: **04.06.2025**
(21) Application number: 21937771.0
(22) Date of filing: 21.04.2021
(51) Int. Cl.: B66B 5/00, B66B 1/34, H04W 4/33, H04W 4/80, H04W 4/38, H04W 52/02

(54) **AN ELEVATOR MONITORING SOLUTION FOR AN ELEVATOR SYSTEM**
AUFZUGSÜBERWACHUNGSLÖSUNG FÜR EIN AUFZUGSSYSTEM
SOLUTION DE SURVEILLANCE D'ASCENSEUR POUR UN SYSTÈME D'ASCENSEUR

(43) Date of publication of application: 28.02.2024
(73) Proprietor: KONE Corporation, 00330 Helsinki (FI)
(72) Inventor: PEKANDER, Otto, 00330 Helsinki (FI)
(74) Representative: Berggren Oy
(86) International application number: PCT/FI2021/050302
(87) International publication number: WO 2022/223869

(56) References cited:
- EP-A1- 3 640 188
- EP-A1- 3 747 813
- EP-A1- 3 747 813
- WO-A1-2022/043600
- CN-A- 106 144 820

## Description

### TECHNICAL FIELD

The invention concerns in general the technical field of elevator systems. Especially the invention concerns monitoring of elevator systems.

### BACKGROUND

Typically, elevator related data may be obtained for example for remote maintenance and/or elevator usage monitoring purposes from internal buses and/or control units of an elevator system. However, for example in case of third-party elevator systems, there may not be access to the internal buses and/or control units for obtaining the elevator related data for the monitoring purposes. A monitoring unit comprising one or more internal or external sensor devices may be arranged to the elevator system to obtain the elevator related data. For example, the monitoring unit may be arranged to an elevator car travelling along an elevator shaft. However, it may not be possible to cover all failure cases with said monitoring unit. Moreover, especially in the elevator systems, where the monitoring unit is traveling on the elevator car along the elevator shaft, addition of one or more further sensor devices residing for example inside the elevator shaft and/or a machine room by simply wiring the sensor devices to the monitoring unit would be very expensive and sometimes even not possible.

Document EP 3747813 A1 discloses a Bluetooth wireless communication system and method for communication in an elevator hoistway. This document is seen as being the closest prior art document of the present invention and discloses the preamble of claim 1.

Document WO 2022/043600 discloses an elevator system comprising and elevator shaft, an elevator car, and a synchronous wireless mesh network comprising plurality of node devices and a gateway device.

Thus, there is need to develop further solutions to improve monitoring of an elevator system.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An objective of the invention is to present an elevator monitoring system, a method and an elevator system for monitoring an elevator system. Another objective of the invention is that the elevator monitoring system, the method and the elevator system for monitoring an elevator system improve monitoring of an elevator system.

The objectives of the invention are reached by an elevator monitoring system, a method and an elevator system as defined by the respective independent claims.

According to a first aspect, an elevator monitoring system for monitoring an elevator system is provided, wherein the elevator monitoring system comprises a wireless mesh network comprising: a first group of node devices comprising a plurality of node devices configured to be constantly on and to be able to participate relaying elevator related monitoring data; a second group of node devices comprising a plurality of node devices, at least one of the plurality of node devices belonging to the second group of node devices is configured to relay elevator related monitoring data from at least one other node device belonging to the second group of node devices, when the second group of node devices are on; and a control node device configured to control the second group of node devices to turn on and to enter a sleep state on demand.

One of the plurality of node devices belonging to the first group of node devices may be the control node device.

Alternatively or in addition, the control node device may be a gateway device of the wireless mesh network.

One or more of the plurality of node devices belonging to the first group of node devices and/or one or more of the plurality of node devices belonging to the second group of node devices may be associated with at least one sensor device configured to obtain elevator related monitoring data.

Each node device being associated with the at least one sensor device may be able to provide the obtained elevator related monitoring data to be relayed via the wireless mesh network at any time, when said node device is on.

The control node device may be configured to control the on demand turning on and entering the sleep state of the second group of the node devices according to one or more elevator system related parameters and/or one or more monitoring data related parameters.

The one or more elevator system related parameters may comprise one or more movement parameters representing movement of the elevator car.

The one or more monitoring data related parameters may comprise need of a specific type of elevator related monitoring data, amount of data to be relayed, and/or need of battery status data of the plurality of node devices belonging to the second group of node devices.

The plurality of node devices belonging to the first group of node devices may be powered by mains.

The plurality of node devices belonging to the second group of node devices may be powered by one or more batteries.

According to a second aspect, a method for monitoring an elevator system with an elevator monitoring system is provided, wherein the elevator monitoring system comprises a wireless mesh network comprising: a first group of node devices comprising a plurality of node devices being constantly on and being able to participate relaying elevator related monitoring data; a second group of node devices comprising a plurality of node devices, at least one of the plurality of node devices belonging to the second group of node devices relays elevator related monitoring data from at least one other node device belonging to the second group of node devices, when the second group of node devices are on; and a control node device, wherein the method comprises: controlling, by the control node device, the second group of node devices to turn on and to enter a sleep state on demand.

One of the plurality of node devices belonging to the first group of node devices may be the control node device.

Alternatively or in addition, the control node device may be a gateway device of the wireless mesh network.

One or more of the plurality of node devices belonging to the first group of node devices and/or one or more of the plurality of node devices belonging to the second group of node devices may be associated with at least one sensor device for obtaining the elevator related monitoring data.

Each node device being associated with the at least one sensor device may be able to provide the obtained elevator related monitoring data to be relayed via the wireless mesh network at any time, when said node device is on.

The control node device may control the on demand turning on and entering the sleep state of the second group of the node devices according to one or more elevator system related parameters and/or one or more monitoring data related parameters.

The one or more elevator system related parameters may comprise one or more movement parameters representing movement of the elevator car.

The one or more monitoring data related parameters may comprise need of a specific type of elevator related monitoring data, amount of data to be relayed, and/or need of battery status data of the plurality of node devices belonging to the second group of node devices.

The plurality of node devices belonging to the first group of node devices may be powered by mains.

The plurality of node devices belonging to the second group of node devices may be powered by one or more batteries.

According to a third aspect, an elevator system is provided, wherein the elevator system comprises: an elevator car configured to travel along an elevator shaft, and an elevator monitoring system as described above.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated and this within the scope of the appended claims. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically an example of an elevator system according to the invention.
Figure 2A and 2B illustrate schematically examples of an elevator monitoring system according to the invention.
Figure 3 illustrates schematically another example of the elevator system.
Figure 4 schematically illustrates an example of components of a node device belonging to a first group of node devices.
Figure 5 schematically illustrates an example of components of a node device belonging to a second group of node devices.
Figure 6 illustrates schematically an example of a method according to the invention.

### DESCRIPTION OF THE EXEMPLIFYING EMBODIMENTS

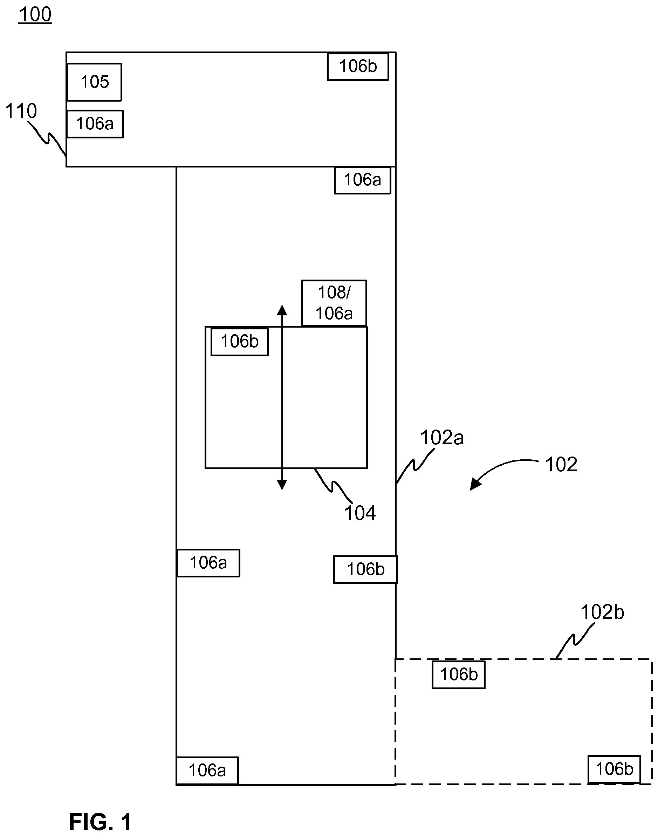

Figure 1 illustrates schematically an example of an elevator system 100. The elevator system 100 comprises an elevator shaft 102, an elevator car 104, and an elevator monitoring system 200. The elevator shaft 102 may comprise one or more parts 102a, 102b. In the example of Figure 1 the elevator shaft 102 comprises a vertical part 102a along which the elevator car 104 is configured to travel between a plurality of landings. The elevator shaft 102 may further comprise a horizontal part 102b. The horizontal part 102b of the elevator shaft 102 is optional and thus illustrated with dashed line in the example of Figure 1. The elevator system 100 may further comprise one or more elevator entities, e.g. a control unit 105, an elevator hoisting machine, etc.. The control unit 105 may be configured to control at least the operation of the elevator system 100, e.g. control the elevator hoisting machine to drive the elevator car 104 along at least part of the elevator shaft 102a between landings. For sake of clarity the elevator hoisting machine the one or other elevator entities are not shown in Figure 1. The elevator control unit 105 may e.g. be arranged to a machine room 110 of the elevator system 100. In the example of Figure 1 a non-limiting example location of the machine room 110 is illustrated. In the example of Figure 1 the machine room 110 locates above the vertical part of the elevator shaft 102a, i.e. top of a building. Alternatively, the machine room 110 may locate for example next to the vertical part of the elevator shaft 102a, i.e. inside the elevator shaft wall. Alternatively, the elevator system 100 may be a machine room-less elevator system, wherein the elevator control unit 105 may be arranged inside the elevator shaft 102.

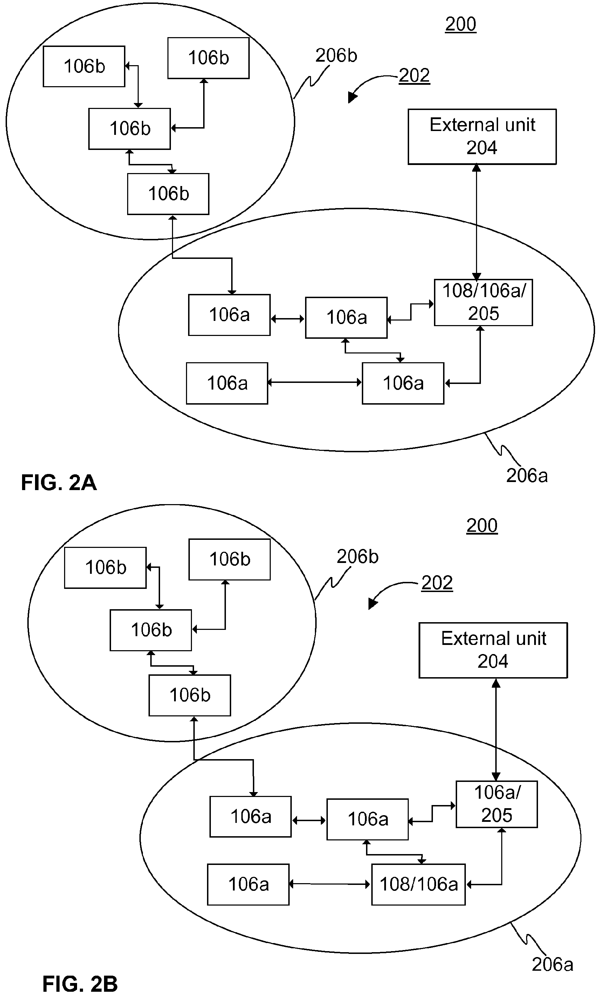

The elevator monitoring system 200 is configured to monitor the elevator system 100. The monitoring of the elevator system 100 by the elevator monitoring system 200 may comprise obtaining elevator related monitoring data as will be described. The elevator related monitoring data may be obtained for example for remote maintenance and/or elevator usage monitoring purposes of the elevator system 100. The elevator monitoring system 200 enables monitoring of third-party elevator systems 100, where there may not be access to internal buses and/or control units of the elevator system 100. Figures 2A illustrates an example of the elevator monitoring system 200. For sake of clarity the entities of the elevator system 100 are not shown in Figure 2. The elevator monitoring system 200 comprises a wireless mesh network 202 comprising a first group 206a of node devices and a second group 206b of node devices, and a control node device 108. One of the plurality of node devices 106a belonging to the first group 206a of node devices may be the control node device 108 as illustrated in the example of Figure 2A. In other words, one of the plurality of node devices 106a belonging to the first group 206a of node devices may operate as the control node device 108. The first group 206a of node devices comprises a plurality of node devices 106a configured to be constantly, i.e. always, on, i.e. in operation. In other words, the first group 206a of node devices form a constantly on part of the wireless mesh network 202. The plurality of node devices 106a belonging to the first group 206a of node devices are able to participate relaying elevator related monitoring data as will be described later. The plurality of node devices 106a belonging to the first group 206a of node devices may be powered by mains, e.g. by wall plug. The second group 206b of node devices comprises a plurality of node devices 106b. The second group 206b of node devices are configured to be on, i.e. in operation, and in a sleep state on demand as will be discussed later. In other words, turning on and entering the sleep state of the second group 206b of node devices are command-based operations. The on demand turning on and entering the sleep state of the second group 206b of node devices are controlled by the control node device 108 as will be described later. The plurality of node devices 106b belonging to the second group 206b of node devices may form one cell of the wireless mesh network 202. The plurality of node devices 106b belonging to the second group 206b of node devices are able to participate relaying the elevator related monitoring data, when the second group 206b of node devices are on, as will be described later. In other words, the plurality of node devices 106b belonging to the second group 206b of node devices are not able to participate relaying elevator related monitoring data during the sleep state. At least one of the plurality of node devices 106b belonging to the second group 206b of node devices is configured to relay elevator related monitoring data from at least one other node device 106b belonging to the second group 206b of node devices, when the second group 206b of node devices are on. When the second group 206b of node devices are entered the sleep state, one or more entities of the plurality of node devices 106b, e.g. processing unit 410, communication unit 430, and/or at least one sensor device 310, may be switched off. Being in the sleep state reduces the power consumption of the plurality of node devices 106b belonging to the second group of node devices 206b. The plurality of node devices 106b belonging to the second group 206b of node devices may be powered by one or more batteries. In other words, the plurality of node devices 106b belonging to the second group 206b of node devices may be battery operated node devices. Therefore, the second group 206b of node devices form a battery-operated part of the wireless mesh network 202.

Each of the plurality of node devices 106a, 106b of the wireless mesh network 202, either belonging to the first group 206a of node devices or to the second group 206b of node devices, may provide information representing its powering technique, i.e. whether the node device is powered by mains or by one or more batteries, to the control node device 108. This enables that the control node device 108 is aware, i.e. knows, which node devices of the wireless mesh network 202 are powered by mains, i.e. belong to the first group 206a of node devices, and which node devices of the wireless mesh network 202 are battery operated, i.e. belong to the second group 206b of node devices. Alternatively or in addition, each of the plurality of node devices 106b belonging to the second group 206b of node devices may provide battery status data representing its battery charge to the control node device 108 when being on.

The plurality of node devices 106a belonging to the first group 206a of node devices may be communicatively coupled with each other. The communication between the plurality of node devices 106a belonging to the first group 206a of node devices may be bi-directional. The plurality of node devices 106b belonging to the second group 206b of node devices may be communicatively coupled with each other. The communication between the plurality of node devices 106b belonging to the second group 206b of node devices may be bi-directional. At least one of the plurality of node devices 106b belonging to the second group 206b of node devices is communicatively coupled with at least one of the plurality of node devices 106a belonging to the first group 206a of node devices. The communication between the at least one of the plurality of node devices 106b belonging to the second group 206b of node devices and the at least one of the plurality of node devices 106a belonging to the first group 206a of node devices may be bi-directional.

In the example of Figure 1 the plurality of node devices 106a belonging to the first group 206a of node devices, the plurality of node devices 106b belonging to the second group of node devices, and the control node device 108 forming the wireless mesh network 202 of the monitoring system 200 are illustrated. At least some of the plurality of node devices 106a, 106b may be arranged inside the elevator shaft 102, e.g. inside the vertical part 102a of the elevator shaft 102 and/or inside the horizontal part 102b of the elevator shaft 102. Alternatively or in addition, one or more node devices of the plurality of node devices 106a, 106b may be arranged to the elevator car 104 travelling along at least part of the elevator shaft 102a. Alternatively or in addition, one or more node devices of the plurality of node devices 106a, 106b may be arranged inside the machine room 110. Alternatively or in addition, one or more node devices of the plurality of node devices 106a, 106b may be arranged to one or more landings (for sake of clarity the landings are not illustrated in Figure 1). In the example of Figure 1 non-limiting examples of the locations of the plurality of node device 106a, 106b within the elevator system 100 are illustrated. The control node device 108 may preferably be arranged to the elevator car 104 of the elevator system 100, e.g. to a roof top of the elevator car 104, as illustrated in the example of Figure 1. Alternatively, the control node device 108 may be arranged to any other location within the elevator system 100 as long as the control node device 108 has a constant connection to at least one node device 106a belonging to the first group 206a of node devices arranged to the elevator car 104, e.g. to the roof top of the elevator car 104.

The monitoring system 200 may further be associated with at least one external unit 204 e.g. a cloud server, any other external server, the control unit 105 of the elevator system 100, and/or a group control unit of the elevator system 100. The monitoring system further comprises a gateway device 205, which operates as a gateway between the wireless mesh network 202 and the at least one external unit 204. In other words, the gateway device 205 may be configured to provide data, e.g. the elevator related monitoring data or any other data, from the wireless mesh network 202, e.g. from one or more node devices 106a, 106b of the wireless mesh network 202, to the at least one external unit 204 and/or from the at least one external unit 204 to the wireless mesh network 202, e.g. to one or more node devices 106a, 106b of the wireless mesh network 202. The gateway device 205 may be arranged to the elevator car 104 of the elevator system 100, e.g. to the roof top of the elevator car 104. Alternatively, the gateway device 205 may be arranged e.g. inside the machine room 110 of the elevator system 100 or to any other location within the elevator system 100. According to an example, one of the plurality of node devices 106a belonging to the first group 206a of node devices may be the gateway device 205, i.e. operate as the gateway device 205 of the wireless mesh network 202. Alternatively or in addition, the control node device 108 may be the gateway device 205 of the wireless mesh network 200 as illustrated in the example of Figure 2A. Figure 2B illustrates another example of the elevator monitoring system 200. The example elevator monitoring system 200 of Figure 2B is otherwise similar to the above described elevator monitoring system 200 illustrated in Figure 2A, but in the example elevator monitoring system 200 of Figure 2B one node device 106a belonging to the first group 206a of node devices is the control node device 108 and another node device 106a belonging to the first group 206a of node devices is the gateway device 205. In the example elevator monitoring system 200 of Figure 2A one node device 106a belonging to the first group 206a of node devices is the control node device 108 and the gateway device 205.

As discussed above, the control node device 108 is configured to control, e.g. command, the second group of node devices 106b to turn on, i.e. wake up, and to enter the sleep state on demand, i.e. according to a need defined by the control node device 108. In other words, the operation (i.e. the turning on and entering the sleep state) of the second group 206b of node devices is command based operation controlled by the control node device 108. The control node device 108 may send to the plurality of node devices 106b belonging to the second group 206b of node devices a message, e.g. a broadcast message, comprising a command, i.e. an instruction, to enter the sleep state and to turn on, i.e. wake up, after being in the sleep state. For example, the message may comprise a command for the plurality of node devices 106b belonging to the second group 206b of node devices to enter the sleep state during a certain, i.e. specific, period of time and to turn on after expiration of said certain period of time. The certain period of time may be defined by the control node device 108. This command-based operation enables that all the plurality of node devices 106b belonging to the second group 206b of node devices wake up at the same time and that all the plurality of node devices 106b belonging to the second group 206b of node devices enter the sleep state at the same time. This enables that a synchronization of the is not needed. According to an example, the control node device 108 may control the second group 206b node devices to enter the sleep state immediately, i.e. instantly after receiving the command from the control node device 108. Alternatively, the control node device 108 may control the second group 206b node devices to enter the sleep state delayed, i.e. at a later instant of time after receiving the command from the control node device 108.

The control node device 108 may control the on demand turning on and entering the sleep state of the second group 206b of the node devices according to one or more elevator system related parameters and/or one or more monitoring data related parameters. The one or more elevator system related parameters may comprise one or more movement parameters representing movement of the elevator car 104. The one or more movement parameters representing the movement of the elevator car 104 may comprise e.g. speed data of the elevator car 104, acceleration data of the elevator car 104, and/or location data of the elevator car 104. The control node device 108 may be configured to obtain the one or more movement parameters from at least one sensor device 450 with which the control node device 108 is associated with or from at least one node device 106a belonging to the first group of node devices being associated with at least one sensor device 450. At least the node device 108, 106a (either the control node device 108 itself or the at least one node device 106a belonging to the first group 206a of node devices) which is associated with the at least one sensor device 450 is arranged to the elevator car 104. For example, if the control node device 108 itself is associated with the at least one sensor device 450, the node device 108 is arranged to the elevator car 104. Alternatively, if the at least one node device 106a belonging to the first group 206a of node devices is associated with the at least one sensor device 450, at least the at least one node device 106a belonging to the first group 206a of node devices is arranged to the elevator car 104. In this case the control node device 108 itself may also be arranged to the elevator car or to any other location within the elevator system 100 as long as the control node device 108 has a constant connection to the at least one node device 106a belonging to the first group 206a. The at least one sensor device 450 may comprise e.g. at least one accelerometer, at least one magnetometer, at least one gyroscope, etc. The control node device 108 may further control the turning on demand turning on and entering the sleep state of the second group 206b of the node devices according to one or more learned movement parameters of the elevator car 104. This enables that the control node device 108 may schedule the turning on demand turning on and entering the sleep state of the second group 206b of node devices according to the one or more learned movement parameters of the elevator car 104. According to an example, when the elevator car 104 is moving, substantially a lot of elevator related monitoring data representing for example movement of the elevator car 104 may be needed to be monitored and thus relayed by the wireless mesh network 202 causing e.g. that more node devices operating e.g. in a sensor role, may be needed. Alternatively or in addition, the movement of the elevator car 104 may change the topology of the wireless mesh network 202, causing that more node devices, e.g. operating in a router role, may be needed to improve the reliability of the wireless mesh network 202. Thus, the control node device 108 may control the second group 206b node devices to turn on, when the elevator car 104 is moving and/or to enter the sleep state, when the elevator car 104 is not moving. For example, after the movement of the elevator car 104, the control node device 108 may control the second group 206b node devices to enter the sleep state during a specific period of time, e.g. during opening and closing of elevator doors, and to turn on after said specific period of time, e.g. after opening and closing of the elevator doors. The one or more monitoring data related parameters may comprise need of a specific type of elevator related monitoring data, amount of data to be relayed, and/or need of battery status data of the plurality of node devices belonging to the second group 206b of node devices.

For example, the control node device 108 may control the second group 206b node devices to be on until all relevant data is received by the control node device 108. According to another example, the control node device 108 may control the second group 206b node devices to be on at certain time intervals, e.g. every x seconds, to provide the battery status data to the control node device 108 and to be in the sleep state between said certain time intervals. According to another example, the control node device 108 may control the second group 206b node devices to be on at certain time intervals, e.g. every x seconds, to obtain specific type elevator related monitoring data, e.g. temperature data, oil level data, etc., and to be in the sleep state between said certain time intervals.

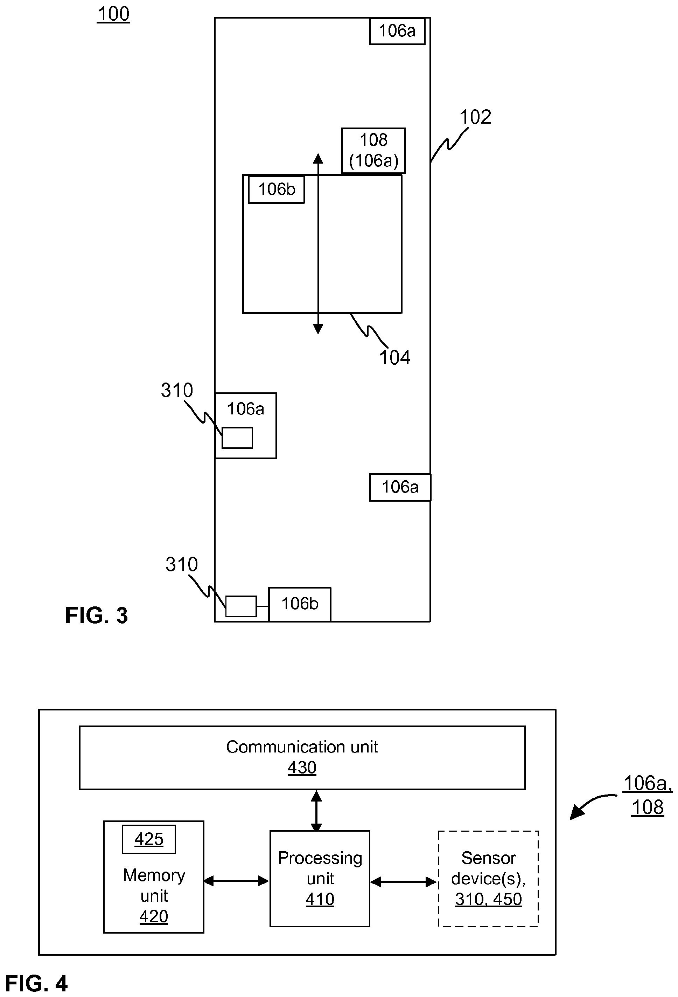

One or more of the plurality of node devices 106a belonging to the first group 206a of node devices and/or one or more of the plurality of node devices 106b belonging to the second group 206b of node devices may be associated with at least one sensor device 310 configured to obtain the elevator related monitoring data to be relayed by the wireless mesh network 202. With the expression "associated with at least one sensor device 310, 450" is meant in this context that the node device 106a, 106b may comprise the at least one sensor device 310, 450 and/or may be communicatively coupled to the at least one sensor device 310, 450, wherein the communicative coupling, i.e. connection, may be based on any know communication technology, either wired or wireless. The one ore more node devices 106a, 106b belonging to the first group 206a of node devices and/or to the second group 206b of node devices associated with the at least one sensor device 310 are operating in a sensor role. Some examples of different type sensor devices 310 are discussed later in this application. According to an example, the at least one sensor device 310 may be configured to obtain the elevator related monitoring data constantly. Alternatively, the at least one sensor device 310 may be configured to obtain the elevator related monitoring data during at least one monitoring period. Duration of the at least one monitoring period may be node device specific and/or sensor device specific. Alternatively, the duration of the at least one monitoring period of two or more sensor devices 310 of one node device 106a, 106b may be the same. Alternatively, the duration of the at least one monitoring period of at least one sensor device 310 of two or more node devices 106a, 106b may be the same. Figure 3 illustrates schematically an example of an elevator system 100, wherein two node devices 106a, 106b (one node device 106a belonging to the first group 206a of node devices and one node device 106b belonging to the second group 206b of node device) each is associated with at least one sensor device 310. The example of Figure 3 illustrates only one non-limiting example and there may be any other number or node devices 106a, 106b that may be associated with at least one sensor device 310. Moreover, there may be any other number of node devices 106a belonging to the first group 206a of node devices that may be associated with at least one sensor device 310 and/or any other number of node devices 106b belonging to the second group 206b of node devices that may be associated with at least one sensor device 310. Alternatively or in addition, the elevator system 100 may comprise any other elevator entities than illustrated in the example of Figure 3, e.g. one or more entities discussed above referring to Figure 1.

Alternatively or in addition, one or more of the plurality of node devices 106a belonging to the first group 206a of node devices and/or one or more of the plurality of node devices 106b belonging to the second group 206b of node devices may be configured to operate in a router role, in which the node device 106a, 106b participate relaying elevator related monitoring data sent by another node device 106a, 106b. In other words, the wireless mesh network 202 may comprise one or more node devices 106a, 106b (belonging to the first group 206a of node devices and/or to the second group 206b of node devices) operating only in the router role, one or more node devices 106a, 106b (belonging to the first group 206a of node devices and/or to the second group 206b of node devices) operating only in the sensor role, and/or one or more node devices 106a, 106b (belonging to the first group 206a of node devices and/or to the second group 206b of node devices) operating in the router role and in the sensor role.

The wireless mesh network 202 is configured to relay, i.e. deliver or provide, the elevator related monitoring data from the one or more node devices 106a, 106b (belonging to the first group 206a of node devices and/or to the second group 206b of node devices) being associated with the at least one sensor device 310, i.e. operating in the sensor role, to the gateway device 205. As discussed above, the gateway device 205 may then be configured to provide the elevator related monitoring data relayed via the wireless mesh network 202 to the at least one external unit 204. The relaying the data, e.g. the elevator related monitoring data, via or by the wireless mesh network 202 means that the data transmitted, i.e. send, by one node device 106a, 106b is relayed by a node device 106a, 106b to a node device 106a, 106b until the data reaches the node device 106, 106b or the gateway device 205 to which the data is intended. In other words, the data may be relayed via the wireless mesh network 202 by a node device 106a, 106b to a node device 106a, 106b until the data reaches the node device 106a, 106b or the gateway device 205 to which the data is intended. As discussed above, the first group 206a of node devices are constantly on and able to participate to the relaying of the elevator related monitoring data. In other words, the first group 206a of node devices operate in an asynchronous mode, in which data may be send and/or delivered at any given time. The second group of 206b node devices are able to participate to the relaying of the elevator related monitoring data when the second group 206b of node devices are on. When the control node device 108 controls the second group of 206b node devices to turn on, the full wireless mesh network 202 operates in the asynchronous mode. In other words, each node device 106a, 106b, either belonging to the first group 206a of node devices or to the second group 206b of node devices, is able to participate to the relaying of the elevator related monitoring data, when said node device 106a, 106b is on.

The elevator related monitoring data may be included for example in a data packet, which is relayed via the wireless mesh network 202 from the one or more node device 106a, 106b of to the gateway device 205. The wireless mesh network 202 may also be configured to relay data from the gateway device 205 to at least one node device 106a, 106b. The data relayed by the wireless mesh network 202 may preferably be the elevator related monitoring data, but also any other data may be relayed via the wireless mesh network 202. The plurality of node devices 106a belonging to the first group 206a of node devices and the plurality of node devices 106b belonging to the second group 206b of node devices may use the same radio protocol. Non-limiting example radio protocols for the communication between the plurality of node devices 106a, 106b and the gateway device 205 may be any known asynchronous protocol, for example, but not limited to, Bluetooth Mesh, Wi-fi Mesh, or Thread Mesh. Each node device 106a, 106b, either belonging to the first group 206a of node devices or to the second group 206b of node devices, being associated with the at least one sensor device 310 may be able to provide, e.g. send, the obtained elevator related monitoring data to be relayed to the gateway device 205 via the wireless mesh network 202 at any time, when said node device 106a, 106b is on. Thus, there is no co-operation between the node devices 106a, 106b on when they are meant to send the obtained elevator related monitoring data, as for example in traditional synchronous wireless mesh networks, in which each node device has its own prescheduled timeslot when it is allowed to send data and/or each node device is informed exactly how long and when the node device needs to be on. Because all node devices 106b belonging to the second group 206b of node devices are configured to turn on at the same time and enter the sleep state at the same time, it makes the protocol substantially simple since the node devices 106b associated with the at least one sensor device 310 do not need to inform beforehand how much data they might want to send in future. Instead, the control node device 108 may decide, if all relevant data is received or not, and finally control the second group 206b of node devices to enter back to sleep state again. This means that from asynchronous wireless mesh network perspective, the node devices 106b belonging to the second group 206b of node devices drop from the wireless mesh network 202 completely during the sleep states, and rejoin and form the full asynchronous wireless mesh network 202 again after turning on.

According to an example, the at least one sensor device 310 may be configured to obtain the elevator related monitoring data during periodic monitoring periods. In other words, the at least one sensor device 310 may be configured to perform periodic monitoring periods during which the elevator related monitoring data may be obtained. The monitoring periods may be performed at regular or irregular periods. If the node device associated with the at least one sensor device 310 is a node device 106b belonging to the second group 206b of node devices, the at least one sensor device 310 may be configured to obtain the elevator related monitoring data when the second group 206b of node devices are on. Alternatively or in addition, the at least one sensor device 310 may be configured to obtain the elevator related monitoring data also when the second group 206b of node devices are in the sleep state.

The one or more node devices 106a, 106b, either belonging to the first group 206a of node devices or to the second group 206b of node devices, being associated with the at least one sensor device 310 may be configured to provide the obtained elevator related monitoring data via the wireless mesh network 202 after each monitoring period. Alternatively, the one or more node devices 106a, 106b, either belonging to the first group 206a of node devices or to the second group 206b of node devices, being associated with the at least one sensor device 310 may be configured to buffer, i.e. store, the elevator related monitoring data obtained during one or more of the at least one monitoring period and to provide the buffered elevator related monitoring data to the gateway device 205 via the wireless mesh network 202 after several monitoring periods. The buffered elevator related monitoring data may comprise elevator related monitoring data obtained during several monitoring periods. In other words, the one or more node devices 106a, 106b, either belonging to the first group 206a of node devices or to the second group 206b of node devices, being associated with the at least one sensor device 310 may be configured to obtain elevator related monitoring data during several monitoring periods and provide the elevator related monitoring data obtained during the several monitoring periods to the gateway device 205 at once, for example in one data packet. The buffered elevator related monitoring data may be stored e.g. to a memory unit 420 of said node device 106a, 106b.

According to an example, the at least one sensor device 310 may be communicatively coupled via at least one communication interface to the elevator system 100, e.g. the elevator control unit 105 and/or at least one control bus of the elevator system 100, to obtain the elevator related monitoring data from the elevator system 100. The communicatively coupling the at least one sensor device 310 to the elevator control unit 105 may be based on a wired communication technology. Alternatively or in addition, the communicatively coupling the at least one sensor device 310 to the at least one control bus of the elevator system 100 may be based on a non-invasive data obtaining with e.g. a control bus reading device. The at least one sensor device 310 communicatively coupled to the elevator system 100 enables delivery of data obtained from the elevator system 100 via the wireless mesh network 202 to the gateway device 205. Alternatively or in addition, data may be delivered via the wireless mesh network 202 from the gateway device 205 to the elevator system 100, e.g. to the elevator control unit 105. For example, the at least one sensor device 310 communicatively coupled to the elevator system 100 may comprise an interface for initiating a remote elevator call.

According to another example, the at least one sensor device 310 may comprise at least one wireless call button comprising a sensor device configured to obtain data representing generation of an elevator call. The wireless mesh network 202 may be used to relay the data representing generation of the elevator call from the wireless call button via the gateway device 205 to the external entity 205, e.g. the elevator control unit 105, the cloud server or the elevator group control unit. According to another example, the at least one sensor device 310 may alternatively or in addition comprise at least one oil level sensor device configured to obtain data representing oil level in a hydraulic oil elevator system. In the hydraulic oil elevator systems, the oil tank may typically be far away from the elevator car 104 and thus also far away from the gateway device 205 arranged e.g. to the elevator car 104 or inside the machine room 110. The wireless mesh network 202 may be used to relay the data representing oil level from the oil level sensor device to the gateway device 205. According to yet another example, the at least one sensor device 310 may alternatively or in addition comprise at least one movement sensor device arranged inside the elevator shaft 102a, 102b configured to data representing detection of someone entering the elevator shaft 102a, 102b. According to yet another example, the at least one sensor device 310 may alternatively or in addition comprise at least one water sensor device configured to obtain data representing detection of water in the bottom of the elevator shaft 102a, 102b, i.e. a pit of the elevator shaft 102a, 102b. According to yet another example, the at least one sensor device 310 may alternatively or in addition comprise at least one temperature sensor device configured to obtain data representing temperature e.g. inside the elevator shaft 102a, 102b, inside the elevator car 104, and/or inside the machine room 110. According to yet another example, the at least one sensor device 310 may alternatively or in addition, comprise at least one accelerometer, at least one magnetometer, and/or at least one gyroscope configured to obtain data representing the movement of the elevator car 104.

Figure 4 schematically illustrates an example of components of the node device 106a belonging to the first group 206a of node devices and/or being the control node device 108. The node device 106a, 108 may comprise a processing unit 410 comprising one or more processors, a memory unit 420 comprising one or more memories, and a communication unit 430 comprising one or more communication devices. The mentioned elements of may be communicatively coupled to each other with e.g. an internal bus. The one or more processors of the processing unit 410 may be any suitable processor for processing information and control the operation of the node device 106a, 108 among other tasks. The memory unit 420 may store portions of computer program code 425, and any other data, and the processing unit 410 may cause the node device 106a, 108 to operate as described by executing at least some portions of the computer program code 425 stored in the memory unit 420. In other words, the computer program code 425 may comprise instructions, which when the program is executed by a computer, e.g. the node device 106a, 108, cause the node device 106a, 108 to carry out the operations of the node device 106a, 108 as described above. Furthermore, the one or more memories of the memory unit 420 may be volatile or non-volatile. Moreover, the one or more memories are not limited to a certain type of memory only, but any memory type suitable for storing the described pieces of information may be applied in the context of the invention. The operations of the node device 106a, 108 may also be implemented with a microcontroller solution with embedded software. The communication unit 430 may be based on at least one known communication technologies, either wired or wireless, in order to exchange pieces of data as described earlier. The communication unit 430 provides an interface for communication with any external unit, such as one or more other node devices 106a, 106b, 108 of the wireless mesh network 202, the at least one sensor device 310, the gateway device 205, any databases and/or any external systems. The communication unit 430 may comprise one or more communication devices, e.g. radio transceiver, antenna, etc. As discussed above, at least one node device of the plurality of node devices 106a, 108 may comprise the at least sensor devices 310 for obtaining the elevator system related data. As discussed above, the node device 106a, 108 may further comprise at least one sensor device 450 for obtaining one or more movement parameters representing movement of the elevator car 104. The node device 106a, 108 may possibly further comprise a user interface comprising I/O devices, such as buttons, keyboard, touch screen, microphone, loudspeaker, display and so on, for receiving input and outputting information. As described above, the power for the node device 106a, 108 belonging to the first group 206a of node devices may be provided from the mains via a plug or similar.

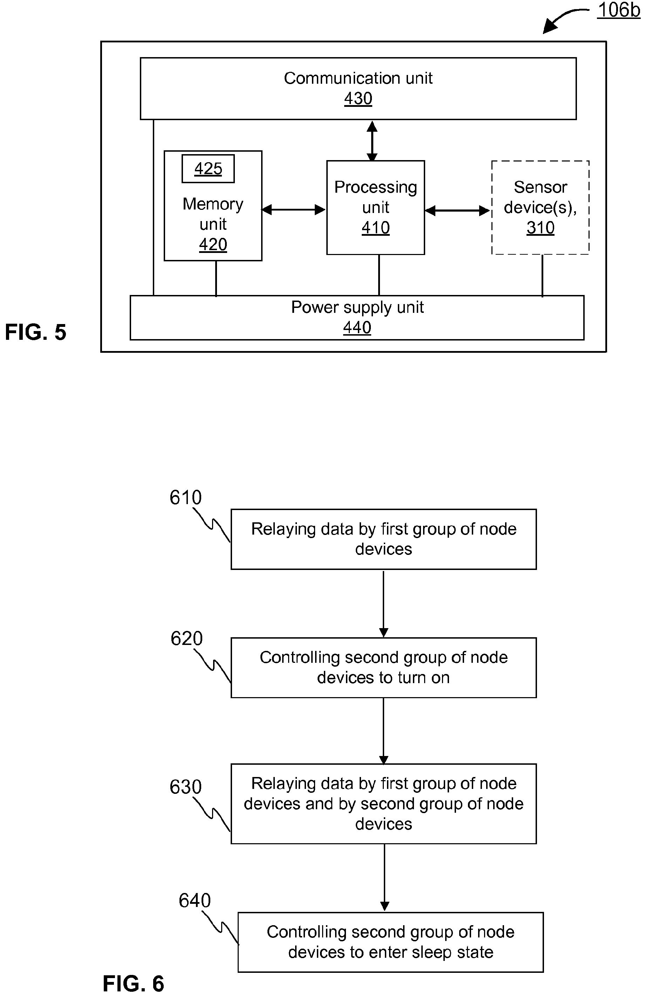

Figure 5 schematically illustrates an example of components of the node device 106b belonging to the second group 206b of node devices. The node device 106b may comprise the same components as the node device 106a, 108 as described above referring to Figure 4, except the at least one sensor device 450. In other words, the node device 106b may comprise the processing unit 410 comprising one or more processors, the memory unit 420 comprising one or more memories, and a communication unit 430 comprising one or more communication devices, and possibly also the at least sensor device 310 for obtaining the elevator system related data as described above referring to Figure 4. The node device 106b may further comprise a power supply unit 440 comprising one or more batteries for powering the node device 106b.

Above the invention is defined referring to the monitoring system 200. Next the at least some aspects of the invention are defined referring to Figure 6 schematically illustrating an example of a method for monitoring an elevator system 100 with the elevator monitoring system 200. Figure 6 schematically illustrates the method as a flow chart.

At a step 610, the second group 206b of node devices are in the sleep state and the elevator related monitoring data is relayed by the first group 206a of node devices, which are constantly on.

At a step 620, the control node device 108 controls, i.e. commands, the second group of node devices 106b to turn on, i.e. wake up, on demand. At the step 630, after the second group 206b of node devices are turned on, the elevator related monitoring data may be relayed by the first group 206a of node devices and by the second group 206b of node devices, which are able to relay the elevator related monitoring data only when the second group 206b of node devices are on. At least one of the plurality of node devices 106b belonging to the second group 206b of node devices relays elevator related monitoring data from at least one other node device 106b belonging to the second group 206b of node devices, when the second group 206b of node devices are on.

At a step 640, the control node device 108 controls, i.e. commands, the second group of node devices 106b to enter the sleep state on demand. In other words, the operation (i.e. the turning on and entering the sleep state) of the second group 206b of node devices is command based operation controlled by the control node device 108. The control node device 108 may send to the plurality of node devices 106b belonging to the second group 206b of node devices a message, e.g. a broadcast message, comprising a command, i.e. an instruction, to enter the sleep state and/or to turn on, i.e. wake up, after being in the sleep state. For example, the message may comprise a command for the plurality of node devices 106b belonging to the second group 206b of node devices to enter the sleep state during a certain period of time and to turn on after expiration of said certain period of time. The certain period of time may be defined by the control node device 108. This command-based operation enables that all the plurality of node devices 106b belonging to the second group 206b of node devices wake up at the same time and that all the plurality of node devices 106b belonging to the second group 206b of node devices enter the sleep state at the same time. This enables that a synchronization of the is not needed.

The control node device 108 may control the on demand turning on and entering the sleep state of the second group 206b of the node devices according to one or more elevator system related parameters and/or one or more monitoring data related parameters as discussed above. The one or more elevator system related parameters may comprise one or more movement parameters representing movement of the elevator car. The one or more monitoring data related parameters may comprise need of a specific type of elevator related monitoring data, amount of data to be relayed, and/or need of battery status data of the plurality of node devices belonging to the second group 206b of node devices.

As discussed above, one or more of the plurality of node devices 106a belonging to the first group 206a of node devices and/or one or more of the plurality of node devices 106b belonging to the second group 206b of node devices may be associated with the at least one sensor device 310 obtaining the elevator related monitoring data to be relayed by the wireless mesh network 202 to the gateway device 205. Alternatively or in addition, one or more of the plurality of node devices 106a belonging to the first group 206a of node devices and/or one or more of the plurality of node devices 106b belonging to the second group 206b of node devices may operate in the router role, in which the node device 106a, 106b participate relaying elevator related monitoring data send by another node device 106a, 106b, as also discussed above. Each node device 106a, 106b, either belonging to the first group 206a of node devices or to the second group 206b of node devices, being associated with the at least one sensor device 310 may be able to provide, e.g. send, the obtained elevator related monitoring data to be relayed via the wireless mesh network 202 at any time, when said node device 106a, 106b is on.

As discussed above, the wireless mesh network 202 relays, i.e. delivers or provides, the elevator related monitoring data from the one or more node devices 106a, 106b (belonging to the first group 206a of node devices and/or to the second group 206b of node devices) being associated with the at least one sensor device 310, i.e. operating in the sensor role, to the gateway device 205. As discussed above, the gateway device 205may then provide the elevator related monitoring data relayed via the wireless mesh network 202 to the at least one external unit 204. The first group 206a of node devices are constantly on and able to participate to the relaying of the elevator related monitoring data. In other words, the first group 206a of node devices operate in an asynchronous mode, in which data may be delivered at any given time. The second group of 206b node devices are able to participate to the relaying of the elevator related monitoring data when the second group 206b of node devices are on. When the control node device 108 controls the second group of 206b node devices to turn on, the full wireless mesh network 202 operates in the asynchronous mode.

The above-described elevator monitoring system 200 and the monitoring method enables that data may be send and relayed via the wireless mesh network 202 at any given time, because at least part of the wireless mesh network 202, i.e. the first group 206a of node devices, is constantly on. Alternatively or in addition, the above-described elevator monitoring system 200 and the monitoring method enables reducing power consumption of the battery-operated node devices 106b without decreasing reliability of the wireless mesh network 202. This is because the battery-operated node devices 106b belonging to the second group 206b of node devices may be entered into the sleep mode to reduce power consumption, while the first group 206b of node devices are constantly on to enable that the reliability of the wireless mesh network 202 is not decreased.

The specific examples provided in the description given above should not be construed as limiting the applicability and/or the interpretation of the appended claims. Lists and groups of examples provided in the description given above are not exhaustive unless otherwise explicitly stated.

## Claims

1. An elevator monitoring system (200) for monitoring an elevator system (100), wherein the elevator monitoring system (200) comprises a wireless mesh network (202) comprising:
a first group (206a) of node devices comprising a plurality of node devices (106a) configured to be constantly on and to be able to participate relaying elevator related monitoring data; and
a second group (206b) of node devices comprising a plurality of node devices (106b), at least one of the plurality of node devices (106b) belonging to the second group (206b) of node devices is configured to relay elevator related monitoring data from at least one other node device (106b) belonging to the second group (206b) of node devices, when the second group (206b) of node devices are on;
**characterized in that** the wireless mesh network further comprises a control node device (108) configured to control the second group (206b) of node devices to turn on and to enter a sleep state on demand.

2. The elevator monitoring system (200) according to claim 1, wherein one of the plurality of node devices (106a) belonging to the first group (206a) of node devices is the control node device (108).

3. The elevator monitoring system (200) according to any of the preceding claims, wherein the control node device (108) is a gateway device (205) of the wireless mesh network (202).

4. The elevator monitoring system (200) according any of the preceding claims, wherein one or more of the plurality of node devices (106a) belonging to the first group (206a) of node devices and/or one or more of the plurality of node devices (106b) belonging to the second group (206b) of node devices are associated with at least one sensor device (310) configured to obtain elevator related monitoring data.

5. The elevator monitoring system (200) according to any of the preceding claims, wherein the control node device (108) is configured to control the on demand turning on and entering the sleep state of the second group (206b) of the node devices according to one or more elevator system related parameters and/or one or more monitoring data related parameters.

6. The elevator monitoring system (200) according to claim 5, wherein the one or more monitoring data related parameters comprise need of a specific type of elevator related monitoring data, amount of data to be relayed, and/or need of battery status data of the plurality of node devices belonging to the second group (206b) of node devices.

7. The elevator monitoring system (200) according to any of the preceding claims, wherein the plurality of node devices (106b) belonging to the second group (206b) of node devices are powered by one or more batteries.

8. A method for monitoring an elevator system (100) with an elevator monitoring system (200) according to any of claims 1 to 7, wherein the method comprises:
controlling (620, 640), by the control node device (108), the second group (206b) of node devices (106b) to turn on and to enter a sleep state on demand.

9. An elevator system (100) comprising:
an elevator car (104) configured to travel along an elevator shaft (102), and
an elevator monitoring system (200) according to any of claims 1 to 7.

## Patentansprüche

1. Aufzugsüberwachungssystem (200) zum Überwachen eines Aufzugssystems (100), wobei das Aufzugsüberwachungssystem (200) ein drahtloses Maschennetzwerk (202) umfasst, das Folgendes umfasst:
eine erste Gruppe (206a) von Knotengeräten, die eine Vielzahl von Knotengeräten (106a) umfasst, die so konfiguriert sind, dass sie ständig eingeschaltet sind und an der Weiterleitung von aufzugsbezogenen Überwachungsdaten teilnehmen können; und
eine zweite Gruppe (206b) von Knotengeräten, die eine Vielzahl von Knotengeräten (106b) umfasst, wobei mindestens eines der Vielzahl von Knotengeräten (106b), die zur zweiten Gruppe (206b) von Knotengeräten gehören, so konfiguriert ist, dass es aufzugsbezogene Überwachungsdaten von mindestens einem anderen Knotengerät (106b), das zur zweiten Gruppe (206b) von Knotengeräten gehört, weiterleitet, wenn die zweite Gruppe (206b) von Knotengeräten eingeschaltet ist;
**dadurch gekennzeichnet, dass** das drahtlose Maschennetzwerk ferner ein Steuerknotengerät (108) umfasst, das dazu konfiguriert ist, die zweite Gruppe (206b) von Knotengeräten so zu steuern, dass sie sich bei Bedarf einschalten und in einen Ruhezustand versetzen.

2. Aufzugsüberwachungssystem (200) gemäß Anspruch 1, wobei eines der Vielzahl von Knotengeräten (106a), die zur ersten Gruppe (206a) von Knotengeräten gehören, das Steuerknotengerät (108) ist.

3. Aufzugsüberwachungssystem (200) gemäß einem der vorhergehenden Ansprüche, wobei das Steuerknotengerät (108) ein Gateway-Gerät (205) des drahtlosen Maschennetzwerks (202) ist.

4. Aufzugsüberwachungssystem (200) gemäß einem der vorhergehenden Ansprüche, wobei ein oder mehrere der Vielzahl von Knotengeräten (106a), die zu der ersten Gruppe (206a) von Knotengeräten gehören, und/oder ein oder mehrere der Vielzahl von Knotengeräten (106b), die zu der zweiten Gruppe (206b) von Knotengeräten gehören, mit mindestens einem Sensorgerät (310) verknüpft sind, das dazu konfiguriert ist, aufzugsbezogene Überwachungsdaten zu erfassen.

5. Aufzugsüberwachungssystem (200) gemäß einem der vorhergehenden Ansprüche, wobei das Steuerknotengerät (108) so konfiguriert ist, dass es das bedarfsgesteuerte Einschalten und den Wechsel in den Ruhezustand der zweiten Gruppe (206b) der Knotengeräte gemäß einem oder mehreren aufzugssystembezogenen Parametern und/oder einem oder mehreren überwachungsdatenbezogenen Parametern steuert.

6. Aufzugsüberwachungssystem (200) gemäß Anspruch 5, wobei die einen oder mehreren überwachungsdatenbezogenen Parameter den Bedarf an einem bestimmten Typ aufzugbezogener Überwachungsdaten, die Menge der weiterzuleitenden Daten und/oder den Bedarf an Batteriestatusdaten der Vielzahl von Knotengeräten umfassen, die zu der zweiten Gruppe (206b) von Knotengeräten gehören.

7. Aufzugsüberwachungssystem (200) gemäß einem der vorhergehenden Ansprüche, wobei die Vielzahl von Knotengeräten (106b), die zur zweiten Gruppe (206b) von Knotengeräten gehören, durch eine oder mehrere Batterien mit Strom versorgt werden.

8. Verfahren zum Überwachen eines Aufzugssystems (100) mit einem Aufzugsüberwachungssystem (200) gemäß einem der Ansprüche 1 bis 7, wobei das Verfahren Folgendes umfasst:
Steuern (620, 640) der zweiten Gruppe (206b) von Knotengeräten (106b) durch das Steuerknotengerät (108), um sie einzuschalten und auf Anforderung in einen Ruhezustand zu versetzen.

9. Aufzugssystem (100) umfassend:
eine Aufzugskabine (104), die so konfiguriert ist, dass sie entlang eines Aufzugsschachts (102) fährt, und
ein Aufzugsüberwachungssystem (200) gemäß einem der Ansprüche 1 bis 7.

## Revendications

1. Système de surveillance d'ascenseur (200) pour surveiller un système d'ascenseur (100), le système de surveillance d'ascenseur (200) comprenant un réseau maillé sans fil (202) comprenant :
un premier groupe (206a) de dispositifs de nœud comprenant une pluralité de dispositifs de nœud (106a) configurés pour être constamment allumés et pour pouvoir participer au relais de données de surveillance liées à l'ascenseur ; et
un second groupe (206b) de dispositifs de nœud comprenant une pluralité de dispositifs de nœud (106b), au moins l'un de la pluralité de dispositifs de nœud (106b) appartenant au second groupe (206b) de dispositifs de nœud est configuré pour relayer des données de surveillance liées à l'ascenseur à partir d'au moins un autre dispositif de nœud (106b) appartenant au second groupe (206b) de dispositifs de nœud, lorsque le second groupe (206b) de dispositifs de nœud est allumé ;
**caractérisé en ce que** le réseau maillé sans fil comprend en outre un dispositif de nœud de commande (108) configuré pour commander le second groupe (206b) de dispositifs de nœud pour s'allumer et entrer dans un état de veille à la demande.

2. Système de surveillance d'ascenseur (200) selon la revendication 1, dans lequel l'un de la pluralité de dispositifs de nœud (106a) appartenant au premier groupe (206a) de dispositifs de nœud est le dispositif de nœud de commande (108).

3. Système de surveillance d'ascenseur (200) selon l'une quelconque des revendications précédentes, dans lequel le dispositif de nœud de commande (108) est un dispositif de passerelle (205) du réseau maillé sans fil (202).

4. Système de surveillance d'ascenseur (200) selon l'une quelconque des revendications précédentes, dans lequel un ou plusieurs de la pluralité de dispositifs de nœud (106a) appartenant au premier groupe (206a) de dispositifs de nœud et/ou un ou plusieurs de la pluralité de dispositifs de nœud (106b) appartenant au second groupe (206b) de dispositifs de nœud sont associés à au moins un dispositif de capteur (310) configuré pour obtenir des données de surveillance liées à l'ascenseur.

5. Système de surveillance d'ascenseur (200) selon l'une quelconque des revendications précédentes, dans lequel le dispositif de nœud de commande (108) est configuré pour commander la mise en marche et l'entrée dans l'état de veille à la demande du second groupe (206b) des dispositifs de nœud selon un ou plusieurs paramètres liés au système d'ascenseur et/ou un ou plusieurs paramètres liés aux données de surveillance.

6. Système de surveillance d'ascenseur (200) selon la revendication 5, dans lequel le ou les paramètres liés aux données de surveillance comprennent le besoin d'un type spécifique de données de surveillance liées à l'ascenseur, la quantité de données à relayer et/ou le besoin de données d'état de batterie de la pluralité de dispositifs de nœud appartenant au second groupe (206b) de dispositifs de nœud.

7. Système de surveillance d'ascenseur (200) selon l'une quelconque des revendications précédentes, dans lequel la pluralité de dispositifs de nœud (106b) appartenant au second groupe (206b) de dispositifs de nœud sont alimentés par une ou plusieurs batteries.

8. Procédé de surveillance d'un système d'ascenseur (100) avec un système de surveillance d'ascenseur (200) selon l'une quelconque des revendications 1 à 7, dans lequel le procédé comprend :
la commande (620, 640), par le dispositif de nœud de commande (108), du second groupe (206b) de dispositifs de nœud (106b) pour s'allumer et entrer dans un état de veille à la demande.

9. Système d'ascenseur (100) comprenant :
une cabine d'ascenseur (104) configurée pour se déplacer le long d'une cage d'ascenseur (102), et
un système de surveillance d'ascenseur (200) selon l'une quelconque des revendications 1 à 7.
